# EUROPEAN PATENT SPECIFICATION

(11) **EP 4 532 932 B1**
(45) Date of publication and mention of the grant of the patent: **02.12.2026**
(21) Application number: 22732109.8
(22) Date of filing: 02.06.2022
(51) Int. Cl.: F04C 2/18, F04C 15/00, F04B 49/02

(54) **AUTOMOTIVE ELECTRIC OIL PUMP**
ELEKTRISCHE ÖLPUMPE FÜR KRAFTFAHRZEUGE
POMPE À HUILE AUTOMOBILE ÉLECTRIQUE

(43) Date of publication of application: 09.04.2025
(73) Proprietor: Pierburg Pump Technology GmbH, 41460 Neuss (DE)
(72) Inventor: SIMONETTI, Gianluca, 41460 Neuss (DE); VEZENTAN, Vlad-Dumitru, 41460 Neuss (DE); MALVASI, Alessandro, 41460 Neuss (DE)
(74) Representative: Eisenführ Speiser
(86) International application number: PCT/EP2022/065105
(87) International publication number: WO 2023/232258

(56) References cited:
- EP-A1- 3 054 160
- US-A1- 2011 070 100
- US-A1- 2019 003 477
- US-A1- 2021 095 649

## Description

The invention is directed to an automotive electric oil pump, in particular to an automotive electric oil pump with an improved cold-start behaviour.

An automotive electric oil pump for supplying an oil circuit within a vehicle is typically driven by an electric drive motor for driving the pump rotor. An automotive electric oil pump is therefore suitable for all kinds of driven vehicles. The automotive electric oil pump is usually cooled by the pumped oil by guiding the oil into that part of the pump housing where the electric drive motor is arranged. As a result, this motor chamber is flooded with oil so that at least the motor rotor of the electric drive motor is as a so-called wet rotor permanently surrounded by oil.

Furthermore, an automotive electric oil pump has a relatively large operating temperature range of -40°C to 150°C. At relatively low temperatures, in particular at temperatures below -10°C, the viscosity of the oil is relatively high so that the oil becomes semi-liquid. The high viscosity of the oil causes a relatively large viscous friction which prevents or impedes the rotation of the pump rotor, if the pump is started, so that only an overpowered electric drive motor generating a relatively large driving torque allows to rotate the pump rotor. Furthermore, the clearances between components that move relatively to each other are decreasing with sinking temperatures.

DE 10 2019 127 498 A1 and US 10,018,198 B2 both disclose an automotive electric oil pump, each automotive electric oil pump being driven by an electric drive motor. The motor chamber which houses the electric drive motor is fluidically connected to the pumping chamber so that oil from the pumping chamber enters the motor chamber and is heated by the waste heat of the operating electric drive motor.

Another example of such a pump is disclosed in US 2019/003477 A1 wherein the stator is in a direct contact with the oil.

The heating of the oil by using the waste heat of the electric drive motor requires an already running electric drive motor. Nevertheless, at the start-up of the motor at low outdoor temperatures, the oil is cold and therefore semi-fluid. The usage of waste heat only can shorten the cold-start phase, if the pump rotor is already rotating, but has no effect if the pump is not yet started. If the oil is that cold, the immediate rotation of the pump rotor further could cause damages at the pump rotor and in particular at the pump wheel.

Moreover, EP 3 054 160 A1 discloses a pump, wherein the stator is electrified without rotating the rotor to pre-heat the oil in the cold-start phase.

It is an object of the present invention to provide an automotive electric oil pump with an improved cold-start behaviour.

This object is achieved by an automotive electric oil pump according to the invention with the features of main claim 1.

An automotive electric oil pump according to the invention comprises a static pump housing which defines a pumping chamber and a motor chamber, wherein the pumping chamber and the motor chamber are fluidically connected to each other. The pump housing can be one single one-piece component or a multi-piece component. Preferably, the pumping chamber and the motor chamber are arranged axially adjacent to each other.

The automotive electric oil pump further comprises an electric drive motor with a motor stator and a motor rotor. The electric drive motor is arranged within the motor chamber of the pump housing. The motor stator comprises several stator coils which are during a normal operation mode of the electric drive motor energised such that the motor rotor is rotated.

The automotive electric oil pump comprises a rotatable pump wheel being arranged within a pumping chamber of the automotive electric oil pump. The pump wheel is co-rotatably connected to the motor rotor for rotating the pump wheel within the pumping chamber. Thereby, in the normal operation mode, oil is pumped through the pumping chamber, for example, into a connected oil circuit of a vehicle. Due to the fluidic connection between the pumping chamber and the motor chamber, a partial volume of the oil being pumped through the pumping chamber flows during the normal operation mode into the motor chamber and through the motor chamber. The partial volume flow is preferably fluidically parallel to the volume flow being pumped through the pumping chamber. Accordingly, the motor chamber is permanently flooded with oil. If the automotive electric oil pump is stopped, the oil remains within the motor chamber as well as within the pumping chamber. With decreasing outdoor temperatures, the viscosity of the oil within the motor chamber increases. At relatively low ambient temperatures, in particular at temperatures below -10°C, the viscosity of the oil is relatively high resulting in a relatively semi-liquid oil that surrounds the electric drive motor.

The automotive electric oil pump comprises a control module which is configured to energise the stator coils in a cold-start phase at relatively low outdoor temperatures. At such low outdoor temperatures, the automotive electric oil pump is started in a cold-start mode. In the cold-start mode, if the temperature of the oil is below a defined temperature value, the control module energises the stator coils with an energizing pattern such that the rotation of the motor rotor is inhibited. Accordingly, the stator coils are energised wherein the rotation of the motor rotor is intentionally inhibited.

As a result of energising the stator coils, the stator coils generate heat which is used for heating the oil surrounding the electric drive motor within the motor chamber. The cold-start mode thereby provides a static heating function of the electric drive motor. The motor stator is in direct contact with the oil so that a direct convective heat transfer from the energised and heated stator coils to the surrounding oil is provided. The oil is thereby heated relatively quickly resulting in a decreasing viscosity of the oil so that the oil becomes more and more liquid. As a result, the viscous friction between the oil and the motor rotor is reduced so that the automotive electric oil pump can be started with a relatively low driving torque, despite of the relatively low outdoor temperatures.

The application of the cold-start mode allows to use a smaller electric drive motor with a lower performance compared to a conventional electric oil pump so that the total size of the automotive electric oil pump according to the invention can be reduced. Furthermore, the start-up phase can be shortened, and the operating temperature range of the pump can be extended.

In a preferred embodiment of the present invention, the motor chamber is fluidically connected to the pumping chamber via an internal connection channel within the pump housing. The connection channel preferably extends through a separating wall between the pumping chamber and the motor chamber. Thereby, a relatively short and direct fluidic connection between the pumping chamber and the motor chamber is provided which allows a continuous internal oil flow between the pumping chamber and the motor chamber.

In a preferred embodiment of the invention, the motor chamber comprises a stator section which is preferably arranged at the radial outside of the motor chamber. Accordingly, the motor stator which is arranged within the stator section circumferentially surrounds the motor rotor of the electric drive motor. The internal connection channel preferably extends between the pumping chamber and the stator section. The fluidic connection between the pumping chamber and the stator section guarantees that oil flows along the motor stator and in particular along the wires of the stator coils which is in particular advantageous for cooling the motor stator if the automotive electric oil pump is in the normal operating mode. The bypassing oil thereby dissipates the heat being generated by the motor stator during operation of the automotive electric oil pump.

In a particularly preferred embodiment, the motor stator additionally contacts the pump housing of the automotive electric oil pump to directly heat the pump housing. If the automotive electric oil pump is, for example, arranged within an oil reservoir as a type of submersible pump, the heating of the pump housing allows additionally to heat the oil surrounding the oil pump within the oil reservoir.

In a preferred embodiment of the present invention, the automotive electric oil pump comprises a hollow drive shaft. The hollow drive shaft co-rotatably connects the pump wheel and the motor rotor of the electric drive motor so that the hollow drive shaft preferably extends from the pumping chamber to the motor chamber. The hollow drive shaft comprises an internal channel extending completely through the hollow drive shaft in axial direction. The internal shaft channel thereby fluidically connects the pumping chamber and the motor chamber of the automotive electric oil pump. Accordingly, the internal shaft channel allows that oil flows from the pumping chamber into the motor chamber or vice versa. If the hollow drive shaft is applicated in combination with the internal connection channel within the pump housing, a closed oil circuit is defined within the pump housing so that the oil can flow, for example, from the pumping chamber through the hollow drive shaft into the motor chamber and through the internal connection channel back into the pumping chamber. Alternatively, the oil can flow in the opposite direction from the pumping chamber through the internal connection channel into the motor chamber and back to the pumping chamber through the hollow drive shaft.

In a preferred embodiment of the invention, the automotive electric oil pump comprises a temperature sensor which allows to measure the oil temperature within the pump housing. By measuring the exact oil temperature within the motor chamber, the heating period during the cold-start mode can be determined precisely to start the normal operating mode as soon as possible and to avoid an overheating of the oil and, for example, of the motor stator in the cold-start mode.

In a preferred embodiment of the invention, the automotive electric oil pump comprises a printed circuit board. The printed circuit board comprises several power electronic components for driving the electric drive motor of the automotive electric pump. The printed circuit board is preferably arranged within a separate electronics chamber within the pump housing. The separate electronics chamber is fluidically separated against the pumping chamber and/or the motor chamber so that the liquidsensitive power electronic components are not contacted by any oil within the pump housing. Preferably, the electronics chamber is arranged axially adjacent to the motor chamber so that the oil flowing through the motor chamber dissipates heat being generated by the power electronic components.

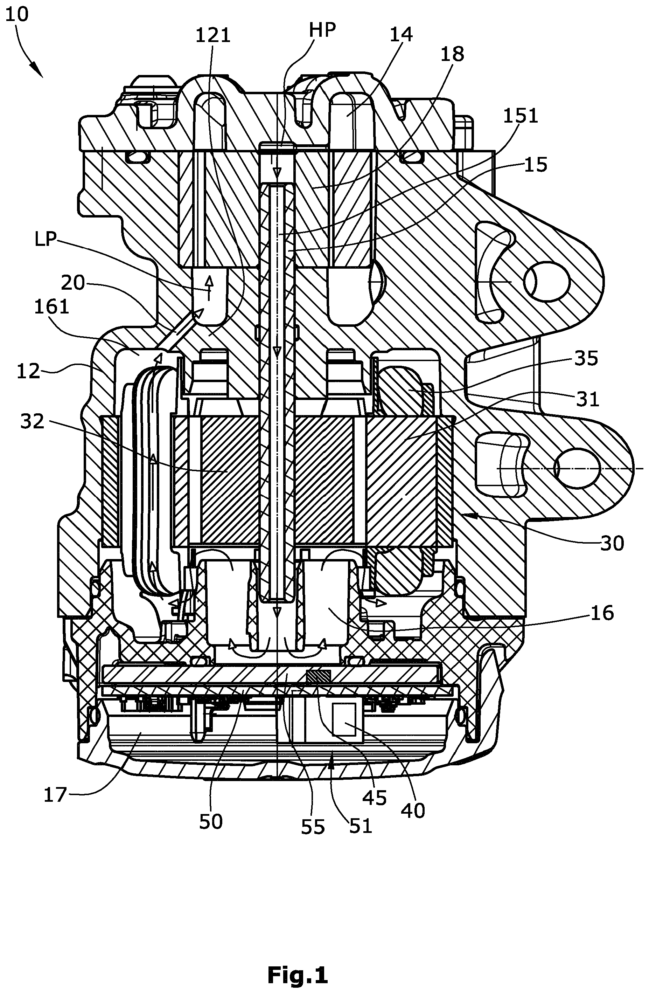

An embodiment of the invention is described with reference to the enclosed drawing, wherein
figure 1 shows an automotive electric oil pump according to the invention in a schematic longitudinal cross-sectional view.

Figure 1 shows an automotive electric gerotor oil pump 10 for a motor vehicle, the automotive electric gerotor oil pump 10 comprising a static pump housing 12 defining a pumping chamber 14 at one axial end of the pump housing 12. The pump housing 12 further defines a motor chamber 16 being arranged axially adjacent to the pumping chamber 14. The automotive electric gear motor oil pump 10 further comprises an electric drive motor 30 with a motor stator 31 and the motor rotor 32. The electric drive motor 30 is arranged within the motor chamber 16 of the pump housing 12. The motor chamber 16 comprises an outer stator section 161 in which the motor stator 31 is arranged. Accordingly, the outer motor stator 31 radially surrounds the inner motor rotor 32. At its radial outside, the motor stator 31 is in direct contact with the pump housing 12. The motor stator comprises several stator coils 35 being arranged equiangularly over the circumference of the motor stator 31.

The automotive electric gerotor oil pump 10 further comprises an electronics chamber 17 being arranged axially adjacent to the motor chamber 16 opposite to the pumping chamber 14. A printed circuit board 50 is arranged within the electronics chamber 17, the printed circuit board 50 comprising several power electronic components 51 for driving the electric drive motor 30. The printed circuit board 50 is arranged axially adjacent and inner heat transferring contact to a heat transfer wall 55 which fluidically separates the electronics chamber 17 from the axially adjacent motor chamber 16.

The automotive electric gerotor oil pump 10 comprises a rotatable pump wheel 18 being arranged within the pumping chamber 14. The pump wheel 18 is co-rotatably connected to the motor rotor 32 via a hollow drive shaft 15. During a normal operation mode, the stator coils 35 of the motor stator 31 are energised such that the motor rotor 32 is electromagnetically driven thereby rotating the pump wheel 18 within the pumping chamber 14 for pumping oil through the pumping chamber 14 and through a fluidically connected oil circuit of the motor vehicle.

The motor chamber 16 is fluidically connected to the pumping chamber 14 via an internal substantially cylindrical connection channel 20 within the pump housing 12, the connection channel 20 extending through a separating wall 121 between the pumping chamber 14 and the motor chamber 16. Thereby, the motor chamber 16 and the pumping chamber 14 are both fluidically connected via the connection channel 20 and via a shaft channel 151 within the hollow drive shaft 15 which extends from the centre of the pumping chamber 14 through the electric drive motor 30 into the motor chamber 16. The hollow drive shaft 15 is thereby fluidically connected to a high-pressure zone HP of the pumping chamber 14, whereas the connection channel 20 is fluidically connected to a low-pressure zone LP of the pumping chamber 14. Thereby, a pressure difference is provided which forces oil to flow from the pumping chamber 14 through the shaft channel 151 to that axial side of the motor chamber 16 being remote to the pumping chamber 14.

The hollow drive shaft 15 guides the oil from the pumping chamber 14 through the motor rotor 32 to the heat transfer wall 55 at the electronics chamber 17. At the transfer wall 55, the oil flows radially outwards and is re-directed into the opposite direction towards the electric drive motor 30. The oil thereby absorbs heat from the heat transfer wall 55, the heat being generated by the power electric components 51 at the printed circuit board 50 during the operation of the electric drive motor 30 in the normal operation mode of the automotive electric gerotor oil pump 10. At the electric drive motor 30, the oil flows substantially radially outwards towards the stator section 161 and flows in axial direction through the free spaces between the stator coils 35 of the star-shaped motor stator 31 towards the separating wall 121 between the motor chamber 16 and the pumping chamber 14. Thereby, the oil dissipates the heat being generated by the motor stator 31. From the stator section 161, the oil flows through the connection channel 20 back into the low-pressure zone LP of the pumping chamber 14.

The automotive electric gerotor oil pump 10 further comprises a control module 40 which is configured to energise the stator coils 35 in a cold-start phase, if the outdoor temperatures are extremely low, for example, below -10°C. At such low outdoor temperatures, if the pump did not run for a longer period, the temperature of the oil within the motor chamber 16 is substantially at a relatively low level so that the viscosity of the oil is relatively high resulting in an extreme semi-liquid condition of the oil. If the temperature of the oil is below a defined temperature value and before the automotive electric gerotor oil pump 10 is started in the normal operation mode, a cold-start mode is initiated to reduce the viscosity of the oil. The temperature of the oil within the motor chamber 16 is measured by a temperature sensor 45 being arranged at the printed circuit board 50 within the electronics chamber 17. In particular, the temperature sensor 45 is arranged in a direct heat-transferring contact with the heat transfer wall 55 to allow a reliable measuring of the oil temperature within the adjacent motor chamber 16.

In the cold-start mode, the stator coils 35 are energised to heat up the oil, but are energised such that the motor rotor 31 is not rotated. For example, the stator coils 35 can be energised without a commutation of the magnetic field so that only a static magnetic field is generated by the motor stator 31 which does not allow a rotation of the motor rotor 32. The heat being generated by the stator coils 35 is transferred to the oil and the rising temperature of the oil reduces its viscosity so that the oil becomes relatively liquid. As a result, the viscous friction between the oil and the motor rotor 32 is significantly reduced and allows to start the rotation of the motor rotor 32 using a relatively low driving torque. The heating time period thereby depends on the temperature of the oil within the motor chamber 16. The heating time period in the cold-start mode ends, if the oil temperature is above a defined temperature value, for example, is above 20°C.

Due to the direct contact between the motor stator 31 and the pump housing 12, the heat being generated by the motor stator 31 during the cold-start mode is additionally transferred to the pump housing 12. The heat is thereby transferred through the pump housing 12 to the pumping chamber 14 so that the oil within the pumping chamber 14 is heated too. If the automotive electric gerotor oil pump 10, for example, would be arranged within an oil reservoir as a type of submersible pump, the heating of the pump housing 12 allows to additionally heat the oil within the oil reservoir.

The invention is not limited to the described embodiment. The automotive electric oil pump 10 could also be defined by any other suitable pump type for pumping oil, for example, the automotive electric oil pump 10 could be a centrifugal pump, a vane pump, a pendulum-slider pump or a sidechannel pump. Furthermore, the automotive electric oil pump 10 could be integrated into an oil reservoir as a type of submersible pump but alternatively could be arranged outside of an oil reservoir. Furthermore, the automotive electric oil pump 10 is suitable for different types of oil circuits within a vehicle, for example for supplying an internal combustion engine or an auxiliary drive unit of an internal combustion engine, but also to supply any oil circuit of a hybrid or battery electric vehicle.

## Claims

1. Automotive electric oil pump (10) comprising:
- a static pump housing (12) defining a pumping chamber (14) and a motor chamber (16), the pumping chamber (14) and the motor chamber (16) being fluidically connected to each other,
- an electric drive motor (30) with a motor stator (31) and a motor rotor (32), the motor stator (31) comprising several stator coils (35), wherein the electric drive motor (30) is arranged within the motor chamber (16),
- a rotatable pump wheel (18) for pumping oil through the pumping chamber (14), wherein a partial volume of the oil within the pumping chamber (14) flows through the motor chamber (16), and wherein the motor stator (31) is in direct contact with the oil, and the automotive electric oil pump being **characterised by**
- a control module (40) being configured to energize the stator coils (35) in a cold-start phase if the temperature of the oil within the motor chamber (16) is below a defined temperature value, the control module (40) energizing the stator coils (35) such that the rotation of the motor rotor (32) is inhibited.

2. Automotive electric oil pump (10) according to claim 1, wherein the motor chamber (16) is fluidically connected to the pumping chamber (14) via an internal connection channel (20) within the pump housing (12).

3. Automotive electric oil pump (10) according to claim 2, wherein the motor chamber (16) comprises a stator section (161) and wherein the internal connection channel (20) extends between the pumping chamber (14) and the stator section (161).

4. Automotive electric oil pump (10) according to one of the preceding claims, wherein the motor stator (32) is in direct contact with the pump housing (12).

5. Automotive electric oil pump (10) according to one of the preceding claims, wherein the automotive electric oil pump (10) comprises a hollow drive shaft (15) for fluidically connecting the pumping chamber (14) and the motor chamber (16).

6. Automotive electric oil pump (10) according to one of the preceding claims, wherein the automotive electric oil pump (10) comprises a temperature sensor (45) for measuring the oil temperature within the pump housing (12).

7. Automotive electric oil pump (10) according to one of the preceding claims, wherein the automotive electric oil pump (10) comprises a printed circuit board (50) comprising several power electronic components (51), the printed circuit board (50) being arranged within an electronics chamber (17) within the pump housing (12).

## Patentansprüche

1. Automobil-Elektroölpumpe (10), umfassend:
- ein statisches Pumpengehäuse (12), das eine Pumpenkammer (14) und eine Motorkammer (16) definiert, wobei die Pumpenkammer (14) und die Motorkammer (16) fluidisch miteinander verbunden sind,
- einen elektrischen Antriebsmotor (30) mit einem Motorstator (31) und einem Motorrotor (32), wobei der Motorstator (31) mehrere Statorspulen (35) umfasst, wobei der elektrische Antriebsmotor (30) innerhalb der Motorkammer (16) angeordnet ist,
- ein drehbares Pumpenrad (18) zum Pumpen von Öl durch die Pumpenkammer (14), wobei ein Teilvolumen des Öls innerhalb der Pumpenkammer (14) durch die Motorkammer (16) strömt, und wobei der Motorstator (31) in direktem Kontakt mit dem Öl steht, und die Automobil-Elektroölpumpe **gekennzeichnet ist durch**
- ein Steuermodul (40), das dazu ausgebildet ist, die Statorspulen (35) in einer Kaltstartphase zu energisieren, wenn die Temperatur des Öls innerhalb der Motorkammer (16) unterhalb eines definierten Temperaturwerts liegt, wobei das Steuermodul (40) die Statorspulen (35) derart energisiert, dass die Rotation des Motorrotors (32) verhindert wird.

2. Automobil-Elektroölpumpe (10) nach Anspruch 1, wobei die Motorkammer (16) über einen internen Verbindungskanal (20) innerhalb des Pumpengehäuses (12) fluidisch mit der Pumpenkammer (14) verbunden ist.

3. Automobil-Elektroölpumpe (10) nach Anspruch 2, wobei die Motorkammer (16) einen Statorabschnitt (161) umfasst und wobei sich der interne Verbindungskanal (20) zwischen der Pumpenkammer (14) und dem Statorabschnitt (161) erstreckt.

4. Automobil-Elektroölpumpe (10) nach einem der vorstehenden Ansprüche, wobei der Motorstator (32) in direktem Kontakt mit dem Pumpengehäuse (12) steht.

5. Automobil-Elektroölpumpe (10) nach einem der vorstehenden Ansprüche, wobei die Automobil-Elektroölpumpe (10) eine hohle Antriebswelle (15) zum fluidischen Verbinden der Pumpenkammer (14) und der Motorkammer (16) umfasst.

6. Automobil-Elektroölpumpe (10) nach einem der vorstehenden Ansprüche, wobei die Automobil-Elektroölpumpe (10) einen Temperatursensor (45) zum Messen der Öltemperatur innerhalb des Pumpengehäuses (12) umfasst.

7. Automobil-Elektroölpumpe (10) nach einem der vorstehenden Ansprüche, wobei die Automobil-Elektroölpumpe (10) eine gedruckte Leiterplatte (50) umfasst, die mehrere leistungselektronische Komponenten (51) umfasst, wobei die gedruckte Leiterplatte (50) innerhalb einer Elektronikkammer (17) innerhalb des Pumpengehäuses (12) angeordnet ist.

## Revendications

1. Pompe à huile électrique automobile (10) comprenant :
- un carter de pompe statique (12) définissant une chambre de pompage (14) et une chambre de moteur (16), la chambre de pompage (14) et la chambre de moteur (16) étant reliées de manière fluidique l'une à l'autre,
- un moteur d'entraînement électrique (30) comportant un stator de moteur (31) et un rotor de moteur (32), le stator de moteur (31) comprenant plusieurs bobines de stator (35), le moteur d'entraînement électrique (30) étant disposé à l'intérieur de la chambre de moteur (16),
- une roue de pompe rotative (18) destinée à pomper de l'huile à travers la chambre de pompage (14), dans laquelle un volume partiel de l'huile à l'intérieur de la chambre de pompage (14) s'écoule à travers la chambre de moteur (16), et dans laquelle le stator de moteur (31) est en contact direct avec l'huile, et la pompe à huile électrique automobile étant **caractérisée par**
- un module de commande (40) configuré pour alimenter les bobines de stator (35) dans une phase de démarrage à froid si la température de l'huile à l'intérieur de la chambre de moteur (16) est inférieure à une valeur de température définie, le module de commande (40) alimentant les bobines de stator (35) de telle sorte que la rotation du rotor de moteur (32) est empêchée.

2. Pompe à huile électrique automobile (10) selon la revendication 1, dans laquelle la chambre de moteur (16) est reliée de manière fluidique à la chambre de pompage (14) par l'intermédiaire d'un canal de liaison interne (20) à l'intérieur du carter de pompe (12).

3. Pompe à huile électrique automobile (10) selon la revendication 2, dans laquelle la chambre de moteur (16) comprend une section de stator (161) et dans laquelle le canal de liaison interne (20) s'étend entre la chambre de pompage (14) et la section de stator (161).

4. Pompe à huile électrique automobile (10) selon l'une des revendications précédentes, dans laquelle le stator de moteur (32) est en contact direct avec le carter de pompe (12).

5. Pompe à huile électrique automobile (10) selon l'une des revendications précédentes, dans laquelle la pompe à huile électrique automobile (10) comprend un arbre d'entraînement creux (15) destiné à relier de manière fluidique la chambre de pompage (14) et la chambre de moteur (16).

6. Pompe à huile électrique automobile (10) selon l'une des revendications précédentes, dans laquelle la pompe à huile électrique automobile (10) comprend un capteur de température (45) destiné à mesurer la température de l'huile à l'intérieur du carter de pompe (12).

7. Pompe à huile électrique automobile (10) selon l'une des revendications précédentes, dans laquelle la pompe à huile électrique automobile (10) comprend une carte de circuit imprimé (50) comprenant plusieurs composants électroniques de puissance (51), la carte de circuit imprimé (50) étant disposée à l'intérieur d'une chambre électronique (17) à l'intérieur du carter de pompe (12).
